# EUROPÄISCHE PATENTANMELDUNG

(11) **EP 1 571 409 A1**
(43) Veröffentlichungstag der Anmeldung: **07.09.2005**
(21) Anmeldenummer: 05004451.0
(22) Anmeldetag: 01.03.2005
(51) Int. Cl.: F41A 19/52

(54) **Spannvorrichtung**

(30) Priorität: 03.03.2004 AT 3442004
(71) Anmelder: Gelan, Alexander, A-6020 Innsbruck (AT)
(72) Erfinder: Gelan, Alexander, A-6020 Innsbruck (AT)
(74) Vertreter: Torggler, Paul Norbert

(57) **Zusammenfassung**

Spannvorrichtung für eine Schlagfeder (11) für ein halbautomatisches Gewehr mit einer Einrichtung zur Schlagfeder-Selbstspannung, wobei die Spannvorrichtung zusätzlich einen Spannschieber (6) aufweist, welcher zwischen einer ersten und einer zweiten Schieberposition verstellbar ist, wobei in der ersten Schieberposition die Schlagfeder (11) von der Einrichtung zur Schlagfeder-Selbstspannung in der Weise spannbar ist, dass eine Schussauslösung möglich ist, und wobei in der zweiten Schieberposition die Schlagfeder (11) von der Einrichtung zur Schlagfeder-Selbstspannung nicht so weit spannbar ist, dass eine Schussauslösung möglich ist.

## Beschreibung

Die vorliegende Erfindung betrifft eine Spannvorrichtung für eine Schlagfeder für ein halbautomatisches Gewehr mit einer Einrichtung zur Schlagfeder-Selbstspannung.

Bei den gattungsgemäßen halbautomatischen Gewehren stellt die Einrichtung zur Schlagfederselbstspannung einen wesentlichen Unterschied zu allen nicht halbautomatischen Selbstspannerwaffen dar. Die Schlagfederselbstspannung ist bereits seit langem bekannt. Sie spannt nach jedem Schuss die Schlagfeder automatisch, sodass durch Betätigen des Abzugs jeweils der nächste Schuss ausgelöst werden kann.

Die halbautomatischen Gewehre wurden bisher nur mit Abzugs- oder Schlagstückssicherung ausgeführt, wodurch eine ungewollte Schussauslösung auch im gesicherten Zustand bei starker Erschütterung möglich ist. Dies hat bei der häufigsten Verwendungsart dieser Waffengattung, also bei Bewegungsjagden sowie Behördeneinsätzen, eine besondere Bedeutung und bringt einen entsprechenden Sicherheitsnachteil, da hier die Gefahr eines Sturzes überdurchschnittlich hoch ist.

Die Aufgabe der vorliegenden Erfindung ist es nun, die Sicherheit solcher Spannvorrichtungen für halbautomatische Gewehre und damit der Waffen selbst zu verbessern.

Erfindungsgemäß wird dies erreicht, indem die Spannvorrichtung zusätzlich einen Spannschieber aufweist, welcher zwischen einer ersten und einer zweiten Schieberposition verstellbar ist, wobei in der ersten Schieberposition die Schlagfeder von der Einrichtung zur Schlagfeder-Selbstspannung in der Weise spannbar ist, dass eine Schussauslösung möglich ist, und wobei in der zweiten Schieberposition die Schlagfeder von der Einrichtung zur Schlagfeder-Selbstspannung nicht so weit spannbar ist, dass eine Schussauslösung möglich ist.

Der Spannschieber ist Teil eines zusätzlichen manuellen Schlagfederspannsystems, welches es ermöglicht die Schlagfeder einer geladenen und gespannten Waffe zu entspannen, wodurch in der zweiten Schieberposition eine ungewollte Schussabgabe unmöglich ist. Erst wenn der Spannschieber in die erste Schieberposition gebracht wird, ist die Schlagfeder von der Einrichtung zur Schlagfederselbstspannung in der Weise spannbar, dass eine Schussauslösung möglich ist. In der Regel wird der Spannschieber erst unmittelbar vor der beabsichtigten Schussauslösung in die erste Position gebracht, wodurch die Schlagfeder dann von der Einrichtung zur Schlagfederselbstspannung spannbar ist. Bei der Spannvorrichtung gemäß der vorliegenden Erfindung ist die Sicherheit der Waffe also nicht mehr von der Zuverlässigkeit bisher schon bekannter Abzugs- oder Schlagstücksicherungen abhängig. Auch wenn diese gegebenenfalls vorhandenen Sicherungen versagen sollten, ist in der zweiten Schieberposition eine ungewollte Schussauslösung unterbunden, da die Schlagfeder von der - wie an sich bekannt arbeitenden - Einrichtung zur Schlagfederselbstspannung gar nicht so weit gespannt werden kann, dass eine Schussauslösung möglich wäre.

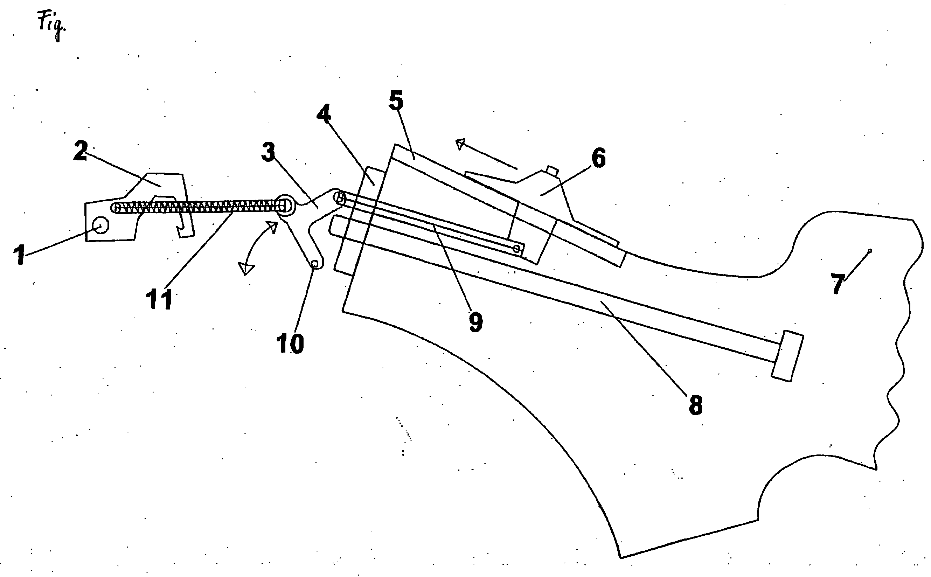

Weitere Merkmale und Einzelheiten ergeben sich aus der nachfolgenden Beschreibung der einzigen Figur. Diese zeigt schematisiert den wesentlichen Teil eines erfindungsgemäßen Ausführungsbeispiels der Spannvorrichtung zusammen mit einem Gewehrschaft.

Am Schaft 7 ist in einer Führungsschiene 5 der griffgünstig gelegene Spannschieber 6 angeordnet. Der Spannschieber 6 ist manuell betätigbar und zwischen einer zweiten, hier dargestellten Position und einer ersten Position in Pfeilrichtung (und in die Gegenrichtung) verschiebbar. Der Spannschieber 6 ist über eine Stange 9 mit einem hier als t-förmiges Kniehebelelement ausgebildeten Spannelement 3 derart verbunden, dass das Verstellen des Spannschiebers 6 von der zweiten Position in die erste Position entlang des Pfeils ein Drehen des t-förmigen Kniehebelelementes 3 um einen Drehpunkt 10 bewirkt. Zwischen dem t-förmigen Kniehebelelement 3 und dem Schlagstück 2 der Spannvorrichtung ist eine Schlagfeder 11 angeordnet. Der Grad der Spannung bzw. Stauchung der Schlagfeder 11 hängt sowohl von der Stellung des Schlagstücks 2 als auch von der Stellung des t-förmigen Kniehebelelementes 3 und damit des Spannschiebers 6 ab. In der dargestellten zweiten Position des Spannschiebers 6 ist das t-förmige Kniehebelelement bzw. das Spannelement 3 so weit in Richtung Schaft gedreht, dass die Schlagfeder 11 in keiner der möglichen Stellungen des Schlagstücks 2 so weit spannbar ist, dass eine Schussauslösung möglich ist. Erst wenn der Spannschieber 6 in Richtung des Pfeils in die erste Position geschoben und das t-förmige Kniehebelelement 3 entsprechend um den Drehpunkt 10 gedreht wurde, ist die Spannfeder 11 von der vorbekannten aber hier nicht explizit dargestellten Einrichtung zur Schlagfederselbstspannung so weit spannbar, dass das Schlagstück 2 durch Drehung um den Drehpunkt 1 abgeschlagen werden kann. Nach dem Abschlagen, also der Schussauslösung, wird das Schlagstück 2 von der hier nicht dargestellten Einrichtung zur Schlagfederselbstspannung, wie beim Stand der Technik bekannt, automatisch wieder in die in der Figur dargestellte Position gebracht, in der es in einen ebenfalls nicht dargestellten Abzugsmechanismus eingreift und von diesem gehalten wird bis der auch nicht dargestellte Abzug des Gewehrs betätigt wird.

Die ebenfalls schematisch dargestellte Schaftschraube 8 verbindet den Schaft 7 mit der Schafthalteplatte 4, die ein Teil des an sich bekannten und hier nicht explizit dargestellten Systemkastens bildet, in dem die Spannvorrichtung sein kann.

Durch den gezeigten kniehebelähnlichen Mechanismus, gebildet aus Spannelement bzw. t-förmigem Kniehebelelement 3 und der Schlagfeder 11, wird ein ausgesprochen kraftarmer Spannvorgang beim Verschieben des Spannschiebers 6 erreicht, womit eine leichte und lautlos zu bedienende Spannvorrichtung für die Schlagfeder 2 eines halbautomatischen Gewehres geschaffen ist. Diese gewährt eine absolute Sicherheit der geladenen Waffe während der Verwendung, da auch im geladenen Zustand alle Federn, die zu einer Patronenzündung führen könnten, ausreichend weit entspannt sind und nicht unbeabsichtigt, zum Beispiel durch die Einrichtung zur Schlagfederselbstspannung, gespannt werden können, solange der Spannschieber 6 in der zweiten Position ist. Obwohl das dargestellte Ausführungsbeispiel nur eine einzige Schlagfeder 11 zeigt, ist eine erfindungsgemäße Spannvorrichtung natürlich auch mit mehreren Schlagfedern realisierbar.

## Patentansprüche

1. Spannvorrichtung für eine Schlagfeder (11) für ein halbautomatisches Gewehr mit einer Einrichtung zur Schlagfeder-Selbstspannung, **dadurch gekennzeichnet, dass** die Spannvorrichtung zusätzlich einen Spannschieber (6) aufweist, welcher zwischen einer ersten und einer zweiten Schieberposition verstellbar ist, wobei in der ersten Schieberposition die Schlagfeder (11) von der Einrichtung zur Schlagfeder-Selbstspannung in der Weise spannbar ist, dass eine Schussauslösung möglich ist, und wobei in der zweiten Schieberposition die Schlagfeder (11) von der Einrichtung zur Schlagfeder-Selbstspannung nicht so weit spannbar ist, dass eine Schussauslösung möglich ist.

2. Spannvorrichtung nach Anspruch 1, **dadurch gekennzeichnet, dass** der Spannschieber (6) manuell betätigbar ist.

3. Spannvorrichtung nach Anspruch 1 oder 2, **dadurch gekennzeichnet, dass** der Spannschieber (6) zwischen der ersten Position und der zweiten Position verschiebbar ist.

4. Spannvorrichtung nach einem der Ansprüche 1 bis 3, **dadurch gekennzeichnet, dass** sie ein t-förmiges Kniehebelelement (3) aufweist.

5. Spannvorrichtung nach Anspruch 4, **dadurch gekennzeichnet, dass** der Spannschieber (6) über eine Stange 9 mit dem t-förmigen Kniehebelelement (3) derart verbunden ist, dass das Verstellen des Spannschiebers (6) von der ersten Position in die zweite Position ein Drehen des t-förmigen Kniehebelelementes (3) um einen Drehpunkt (10) bewirkt.

6. Spannvorrichtung nach einem der Ansprüche 4 oder 5, **dadurch gekennzeichnet, dass** zwischen dem t-förmigen Kniehebelelement (3) und einem Schlagstück (2) der Spannvorrichtung die Schlagfeder (11) angeordnet ist.

7. Spannvorrichtung nach Anspruch 6, **dadurch gekennzeichnet, dass** das Schlagstück (2) um einen Drehpunkt (1) drehbar ist.

8. Spannvorrichtung nach Anspruch 7, **dadurch gekennzeichnet, dass** die Schlagfeder (11) außerhalb des Drehpunktes (1) am Schlagstück (2) angreift.

9. Spannvorrichtung nach einem der Ansprüche 1 bis 8, **dadurch gekennzeichnet, dass** der Spannschieber (6) an einer Führungsschiene (5) für den Spannschieber (6) angeordnet ist.

10. Halbautomatisches Gewehr mit einer Spannvorrichtung nach einem der Ansprüche 1 bis 9.

11. Halbautomatisches Gewehr nach Anspruch 10 mit einem Schaft (7), **dadurch gekennzeichnet, dass** eine Führungsschiene (5) für den Spannschieber (6) an dem Schaft (7) angeordnet ist.
